Europäisches Patentamt

(19) European Patent Office

Office européen des brevets

(11) Numéro de publication : **0 438 335 A1**

## (12) DEMANDE DE BREVET EUROPEEN

(21) Numéro de dépôt : **91400060.9**

(22) Date de dépôt : **11.01.91**

(51) Int. Cl.⁵ : **H04N 3/15**

(30) Priorité : **16.01.90 FR 9000429**

(43) Date de publication de la demande :
**24.07.91 Bulletin 91/30**

(84) Etats contractants désignés :
**DE GB IT SE**

(71) Demandeur : **THOMSON-CSF**
**51, Esplanade du Général de Gaulle**
**F-92800 Puteaux (FR)**

(72) Inventeur : **Becker, Alain**
**THOMSON-CSF SCPI Cédex 67**
**F-92045 Paris la Défense (FR)**

(74) Mandataire : **Chaverneff, Vladimir et al**
**THOMSON-CSF SCPI**
**F-92045 PARIS LA DEFENSE CEDEX 67 (FR)**

(54) **Dispositif à tranfert de charges à dynamique élargie.**

(57)    Ce dispositif comporte, sur un même composant : une zone image (ZI), comprenant un premier réseau d'au moins un ligne de cellules (12) intégrant une charge électrique (Qi) pouvant être ensuite transférée de proche en proche dans le réseau, le long de la ligne, jusqu'à une extrémité de cette dernière ; une zone mémoire (ZM), comprenant un second réseau avec un même nombre de lignes de cellules ; et une zone de transfert (ZT).

Selon l'invention, la ligne du second réseau est une ligne bouclée séquencée comme la ligne correspondante du premier réseau et à la même cadence, et la zone de transfert comprend : des moyens diviseurs de charge (31, 32), recevant en entrée ladite charge (Qi) transférée de proche en proche dans le premier réseau le long de la ligne et fractionnant celle-ci en deux sous-charges ((1-1/n)Qi ; Qi/n) de rapport relatif (n) prédéterminé ; des moyens pour neutraliser la première de ces sous-charges ; et des moyens pour ajouter la seconde (Qi/n) de ces sous-charges à la charge (Qg) reçue en sortie de la ligne bouclée et réinjecter la charge totale (Qg+Qi/n) résultante à l'entrée de la ligne bouclée de manière à l'y faire recirculer.

Le séquencement concomitant des lignes du premier réseau et du second réseau est répété sur une pluralité de cycles, de manière à faire croître, par cumul des secondes sous-charges successives dans la ligne bouclée, la charge correspondante du réseau mémoire.

On accroît ainsi, par la seconde intégration résultante, la dynamique du dispositif à transfert de charges dans une proportion correspondant audit rapport prédéterminé des deux sous-charges, typiquement de 40 dB (portant ainsi la dynamique, par exemple, de 120 à 160 dB) pour un rapport de 100 :1.

EP 0 438 335 A1

Jouve, 18, rue Saint-Denis, 75001 PARIS

$$\frac{n-1}{n}Q_i \quad 31$$

$$(0,99c) \quad 33$$

12

$Q_i$

$(99\%Q_i)$

(C)

$(1\%Q_i) \quad \frac{Q_i}{n}$

$(0,01c) \quad 32$

$Q_g + \frac{Q_i}{n}$

$Q_g$

34

ZI     ZT     ZM

FIG_3

## DISPOSITIF A TRANSFERT DE CHARGES A DYNAMIQUE ELARGIE

La présente invention concerne un dispositif à transfert de charges, également connu sous la terminologie « réseau DTC » ou « réseau CCD » (pour *Charge Coupled Device*).

Elle concerne, dans son aspect le plus général, la détection d'un faisceau lumineux par un réseau DTC et pourra être avantageusement mise en oeuvre dans toutes les applications susceptibles d'utiliser des réseaux DTC lorsqu'un un temps d'éclairement important est nécessaire et impose une grande dynamique du composant, pour éviter ou limiter les problèmes de saturation de celui-ci.

Elle peut être mise en oeuvre aussi bien sous la forme d'un réseau unidimensionnel (« barette DTC ») ou bidimensionnel, comme dans les exemples, non limitatifs, que l'on donnera par la suite.

On sait que, essentiellement, un dispositif à transfert de charges capte en chaque pixel exposé du réseau un flux lumineux incident et transforme l'énergie correspondante en une charge électrique qui est emmagasinée dans un condensateur élémentaire et vient s'accroître pendant toute la durée de l'exposition, dite « temps d'intégration ».

Les charges résultantes sont ensuite transférée de proche en proche dans le réseau jusqu'à parvenir à un composant capable de relire chaque charge emmagasinée et de convertir celle-ci en une tension ou un courant utilisable par des circuits de traitement disposés en aval.

Les meilleurs réseaux DTC actuels, par exemple ceux commercialisés sous la marque *Dynasensor* par Dalsa, Inc. , possèdent une dynamique de l'ordre de 120 dB, dynamique dont les limites sont essentiellement dictées par le risque de saturation de chaque pixel sous l'effet d'un éclairement trop prolongé (effet de débordement sur les pixels voisins), et surtout de saturation de l'amplificateur électrique de lecture du circuit de détection (une dynamique de 120 dB correspond en effet à une plage de tensions pouvant aller de 10 nV à 10 V, ce qui représente un écart de tension considérable).

Dans de nombreuses applications, cette limite de 120 dB est encore néammoins insuffisante pour certains traitements ou certaines mesures que l'on souhaiterait effectuer.

Il en est ainsi — par exemple — lorsque les réseaux DTC sont utilisés pour réaliser un traitement optique du signal, tout particulièrement dans les architectures à deux dimensions opérant en temps réel par voie optique et effectuant le traitement (corrélation et filtrage, notamment) de signaux tels que ceux délivrés par des récepteurs radar ou de télécommunications.

En effet, dans cet exemple d'application au traitement du signal, on perd une partie importante de la dynamique du fait que l'on doit intégrer non seulement le signal utile proprement dit à corréler ou filtrer mais également la composante moyenne du niveau de base ou *pedestal* de corrélation, qui sera éliminée par la suite, mais dont le niveau propre est déjà de l'ordre de 70 dB.

Dans une telle application, il serait souhaitable, pour cette raison, de pouvoir disposer d'une dynamique notablement supérieure à 120 dB, même si l'on ne peut utiliser que les 120 dB supérieurs de la gamme, correspondant à la dynamique utile du signal après suppression du niveau de base.

On pourrait, à cet effet, accroître la dynamique en utilisant deux composants DTC distincts, le premier fonctionnant à la manière d'un DTC classique et le second, placé en aval du premier, n'étant pas photoactif mais servant à effectuer une seconde intégration pendant que l'intégration de base se poursuit dans le premier composant.

Cette manière de procéder présente cependant deux inconvénients, qui lui sont inhérents :

– En premier lieu, elle dégrade de façon importante le rapport signal/bruit, car l'utilisation de deux composants séparés impose nécessairement une double conversion de signal (conversion de la charge en une tension ou un courant, pour sortir du premier réseau DTC, puis conversion de cette tension ou de ce courant en une charge, pour entrer dans le second réseau DTC), qui est très pénalisante en raison du facteur de bruit introduit par les composants actifs assurant ces conversions.

En outre, ce bruit est multiplié par le nombre de transferts entre DTC qui sera nécessaire à l'obtention du résultat.

– En second lieu, elle augmente de façon importante la durée totale d'intégration, en raison du temps de transfert des charges, de l'ordre d'une microseconde par échantillon, ce qui donnerait un temps total de 4 secondes pour transférer un réseau de 2000 x 2000 pixels.

L'idée de base de l'invention est de permettre un élargissement de la dynamique des réseaux actuels en effectuant une double intégration, mais en réalisant la seconde intégration directement dans le composant, sans aucune sortie du signal hors de celui-ci ni transformation de la nature de l'information entre le début et la fin de cette double intégration.

En effet, si l'on peut rester à l'intérieur du composant au lieu d'en sortir, on n'introduira, du fait de l'absence de composant actif, aucun bruit supplémentaire, le traitement étant alors uniquement constitué d'opérations effectuées en arithmétique à transfert de charges.

L'invention propose un dispositif à transfert de charges, réalisé sur un même composant, permettant d'atteindre ce but.

La structure de base du composant de l'invention est celle, connue en tant que telle, d'un composant à deux zones (zone image et zone mémoire) séparées.

Plus précisément, une telle structure connue comprend, sur un même composant :

– une zone image, comprenant un premier réseau d'au moins un ligne de cellules constituées chacune d'un pixel photoactif recevant une énergie lumineuse et opérant une première intégration de celle-ci par accumulation d'une charge électrique correspondante, cette charge pouvant être ensuite transférée de proche en proche dans le réseau, le long de la ligne, jusqu'à une extrémité de cette dernière,

– une zone mémoire, comprenant un second réseau de cellules non photoactives, et dont le nombre de lignes est homologue de celui du premier réseau,

– une zone de transfert, interposée entre la zone image et la zone mémoire, pour recevoir les charges cumulées dans les cellules du premier réseau et les transférer vers le second réseau pour les y emmagasiner, et

– des moyens de lecture, pour détecter les charges emmagasinées dans le second réseau et les transformer en un signal électrique de tension ou de courant,

Comme cela est bien connu, le premier réseau DTC (zone image) du composant est photoactive ; elle intègre le signal lumineux pendant un temps donné jusqu'à ce que le résultat atteigne une fraction du niveau de saturation, fonction de la qualité recherchée et, à la fin de chaque intégration, elle transfère son contenu au second réseau DTC (zone mémoire).

Mais un tel réseau classique ne fait que transférer ses données de la zone image vers la zone mémoire, ce transfert étant réalisé en outre à cadence rapide de manière à minimiser le temps de latence du traitement.

Le second réseau est relu à cadence plus lente pendant un nouveau cycle d'intégration du premier réseau, pour restituer l'information emmagasinée. Il n'est alors plus possible, après le transfert, de continuer à intégrer le signal optique initial.

A la différence de ces réseaux de l'art antérieur, l'invention propose, essentiellement, de conserver dans la zone mémoire la charge pendant un grand nombre de cycles d'intégration de la zone image, et de faire croître cette charge, de transfert en transfert, en ajoutant à la charge déjà présente dans la zone mémoire une fraction de la charge emmagasinée dans la zone image et que l'on vient de transférer.

On pourra ainsi augmenter la dynamique du réseau DTC de la fraction de charge utilisée dans le transfert.

Plus précisément, à cet effet, le dispositif à transfert de charges est caractérisé, selon la présente invention, en ce que, pour ladite ligne (dans le cas d'un réseau unidimensionnel) ou pour chacune desdites lignes (pour un réseau bidimensionnel) :

– la ligne du second réseau est une ligne bouclée séquencée en même temps que la ligne correspondante du premier réseau et à la même cadence, cette ligne comprenant une entrée et une sortie, de manière à pouvoir recevoir sur cette sortie les charges introduites en entrée et transférées de proche en proche jusqu'à la sortie, et

– la zone de transfert comprend :

• des moyens diviseurs de charge, recevant en entrée ladite charge transférée de proche en proche dans le premier réseau le long de la ligne et fractionnant celle-ci en deux sous-charges de rapport relatif prédéterminé,

• des moyens pour neutraliser la première de ces sous-charges, et

• des moyens pour ajouter la seconde de ces sous-charges à la charge reçue en sortie de la ligne bouclée et réinjecter la charge totale résultante à l'entrée de la ligne bouclée de manière à l'y faire recirculer,

Le séquencement concomitant des lignes du premier réseau et du second réseau est alors répété sur une pluralité de cycles, de manière à faire croître, par cumul des secondes sous-charges successives dans la ligne bouclée, la charge correspondante du réseau mémoire et accroître ainsi, par la seconde intégration qui en résulte, la dynamique du dispositif à transfert de charges dans une proportion correspondant audit rapport prédéterminé des deux sous-charges.

Les moyens diviseurs de charge sont, en eux-mêmes, des dispositifs classiques, connus de l'homme du métier, et ils peuvent être indifféremment réalisés soit sous forme d'un diviseur capacitif, soit sous forme d'un diviseur électrique (à barrière de potentiel contrôlée).

Il en est de même pour les moyens neutraliseurs de charge et les moyens additionneurs de charges.

Le rapport prédéterminé des deux sous-charges est avantageusement de l'ordre de 100 :1, ce qui permet d'obtenir un accroissement correspondant de dynamique de 40 dB.

De préférence, la ligne bouclée est réalisée sur le composant sous forme d'une ligne repliée formée de deux moitiés adjacentes de même longueur et transférant les charges dans des sens opposés.

Les cellules de la ligne bouclée repliée ont alors, avantageusement, une largeur qui est approximativement la moitié de celle des cellules de la ligne du premier réseau, de manière que les lignes homologues de chacun des réseaux aient des largeurs respectives qui soient sensiblement identiques.

On va maintenant décrire un exemple de mise en oeuvre de l'invention, en référence aux dessins annexés.

La figure 1 montre schématiquement un composant DTC selon l'invention, avec ses deux réseaux constitués d'une zone image et d'une zone mémoire, ces deux zones étant séparées par une zone de transfert.

La figure 2 est un détail de la figure 1 correspondant à une ligne horizontale isolée du composant de la figure 1, avec ces mêmes zones.

La figure 3 est un schéma explicatif montrant la manière dont est opérée la division et le cumul des charges dans la zone de transfert.

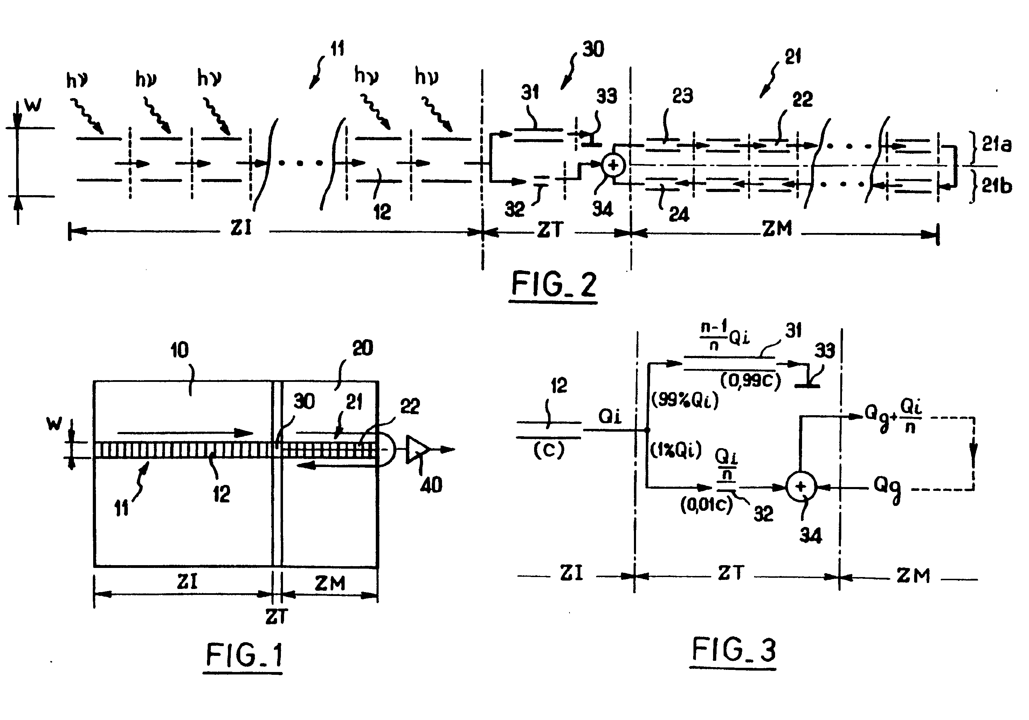

Sur la figure 1, la référence 10 désigne le réseau de la zone image ZI d'un composant DTC à deux zones image et mémoire séparées, la référence 20 désignant le réseau de la zone mémoire ZM.

Ces deux réseaux sont interconnectés par une zone de transfert ZT, dont la structure et le fonctionnement, que l'on décrira plus bas, sont caractéristiques de l'invention.

Le contenu de la zone mémoire ZM pourra être lu au moyen d'un amplificateur de détection 40 qui transformera les charges emmagasinées dans la zone mémoire en signaux électriques de tension ou de courant. Cet aspect du composant est classique en tant que tel et ne sera pas exposé en détail pour cette raison ; on indiquera cependant que l'on peut utiliser tous les modes de lecture connus, à savoir, principalement la lecture simultanée, en parallèle, de toutes les lignes du réseau (avec dans ce cas autant d'amplificateurs 40 que de lignes) ou la lecture successive des différentes lignes, chacune étant transférée en séquence dans un registre tampon formé d'un registre à décalage comprenant le même nombre de pixels que chacune des lignes de la zone mémoire et relié, dans ce cas, à un unique amplificateur de détection 40.

On va maintenant exposer plus en détail la structure de chacune des lignes du composant, en référence à la figure 2 (le composant pouvant, le cas échéant, ne comporter qu'une seule ligne, dans le cas d'une barrette DTC).

On précisera que, sur la figure 2, on a symbolisé par un trait interrompu les différentes barrières de potentiel séparant les cellules du composant ; par souci de clarté, les moyens permettant de contrôler de façon coordonnée ces différentes barrières de potentiel, qui sont en eux-mêmes des moyens classiques, n'ont pas été représentés.

La ligne 11 de la zone image ZI est de structure classique, avec une série de cellules 12 correspondant chacune à un pixel photoactif recevant une énergie lumineuse élémentaire hv et transformant celle-ci en une charge électrique qui va croître au fur et à mesure de l'illumination (phénomène d'intégration du flux lumineux).

A la fin de l'intégration, les charges accumulées dans chacun des pixels vont être transférés, de proche en proche, jusqu'à la zone de transfert ZT par contrôle approprié, selon un séquencement précis et coordonné, des barrières de potentiel séparant chacun des pixels. Ce transfert des charges de proche en proche par contrôle des barrières de potentiel séparant les différents pixels ou cellules est caractéristique de tous les dispositifs à transfert de charges et ne sera pas décrit en détail pour cette raison.

La ligne 21 du réseau constituant la zone mémoire ZM est également classique, et comprend une pluralité de cellules 22, en nombre égal aux cellules 12 de la zone image et séparées les unes des autres par des barrières de potentiel dont le contrôle par des signaux d'horloge appropriés permet d'assurer le décalage des charges le long de la ligne, depuis la première cellule 23 jusqu'à la dernière cellule 24.

Cette ligne 21 de la zone mémoire présente cependant deux caractères originaux par rapport à un composant classique :

– En premier lieu, elle est bouclée, c'est-à-dire que l'on va permettre non seulement un décalage, mais également une recirculation des charges dans la ligne en réinjectant lors du décalage des charges, au moyen d'un élément 34 que l'on décrira plus bas, la charge de la dernière cellule 24 vers la première cellule 23 de la ligne.

– En second lieu, on réalise la ligne 21 sous forme repliée, c'est-à-dire qu'on la réalise sous forme de deux demi-lignes parallèles et contiguës 21a et 21b, les charges circulant dans chaque demi-ligne en sens inverse, de manière à ramener la première cellule 23 à proximité de la dernière cellule 24.

Il est avantageux, dans ce cas, que la largeur (dimension physique dans la direction perpendiculaire à celle de la ligne, c'est-à-dire dans la direction verticale avec les conventions de la figure) des cellules 22 de la zone mémoire ZM soit approximativement la moitié de celle des cellules 12 de la zone image ZI, afin que la largeur W de l'ensemble des deux lignes mises bout à bout soit sensiblement constante, ce qui permet d'optimiser la surface occupée sur le substrat.

On notera que cette seconde caractéristique (ligne repliée), à la différence de la première (ligne rebouclée), n'est pas indispensable à la mise en oeuvre de l'invention ; on pourrait en effet prévoir une ligne 21 non repliée, avec une liaison de retour permettant de ramener la charge de la dernière cellule (qui alors se trouverait à l'extrême droite du composant, avec les conventions de figure) vers la zone de transfert, située en partie centrale du composant.

Cette liaison longue de retour serait cependant pénalisante, tant du point de vue technologique (le dessin du composant serait rendu plus complexe) qu'électrique (du fait des pertes introduites par ce transfert).

On va maintenant expliquer la structure et le fonctionnement des moyens 30 de la zone de transfert ZT, qui assure d'une part et de façon en elle-même classique, le transfert des charges de la zone image ZI vers la zone mémoire ZM et, d'autre part et de façon caractéristique de l'invention, la recirculation des charges emmagasinées dans la zone mémoire et le traitement permettant d'effectuer sur ces charges la seconde intégration permettant d'obtenir l'élargissement de dynamique recherché.

Ces moyens de transfert 30 comportent essentiellement des moyens pour diviser la charge Qi transférée depuis la dernière cellule 12 (celle représentée figure 3) de la zone image ZI en la fractionnant en deux sous-charges selon un rapport de division $n$ prédéterminée qui, dans l'exemple illustré est de 100 :1.

On peut notamment utiliser des moyens diviseurs capacitifs, constitués de deux condensateurs 31 et 32 dont la somme des capacités est égale à la capacité C de la cellule 12 et dont le rapport des capacités est égal au rapport de division $n$ recherché. Ainsi, pour un rapport de division $n$ = 100, le condensateur 31 aura une capacité de 0,99 C et le condensateur 32 une capacité de 0,01 C. De la sorte, on retrouvera sur le condensateur 31 une charge de valeur $(1-1/n)Qi$, soit 0,99 Qi, et sur le condensateur 32 une charge de valeur Qi/n, soit 0,01 Qi.

La charge sur le condensateur 31, inutilisée, sera neutralisée pour éviter une accumulation de charge au cours des cycles successifs. On procédera en la dirigeant vers un puits de destruction de charges, symbolisé par la référence 33.

En revanche, la charge sur le condensateur 32 sera ajoutée à la charge Qg déjà présente dans la cellule de la ligne du réseau mémoire correspondante aux pixels en question au moyen d'un additionneur de charge 34, la charge résultante Qg+Qi/n étant réinjectée dans la ligne du réseau de la zone mémoire au cycle suivant, à la place de Qg, afin de l'y faire recirculer.

On notera qu'il n'est pas nécessaire d'utiliser des moyens diviseurs et additionneurs de charge capacitifs, mais que l'on peut également utiliser, au lieu de ces moyens capacitifs, des moyens électriques opérant (de manière également connue en tant que telle) une division au moyen d'un champ électrique contrôlé (barrière de potentiel). On peut également obtenir l'effet souhaité par une décharge de la capacité dans une résistance pendant un temps contrôlé (jusqu'à obtenir Qi/n).

Le facteur de division $n$ sera choisi de manière que la charge cumulée au bout du temps final d'intégration (lui-même dépendant du nombre de cycles de recirculation dans la zone mémoire) atteigne un niveau généralement inférieur au niveau de saturation du réseau.

On va maintenant décrire la manière dont a lieu le séquencement du transfert.

A l'instant t de l'intégration, on aura :
$$t = k.T1 + (K-1).Tt, \text{ avec} : 0 < t < T2$$
k étant le rang de la dernière intégration effectuée (k étant compris entre 1 et une valeur maximale correspondant au nombre de cycles d'intégration prévu, par exemple 100 cycles),
T1 étant la durée de chacune des intégrations de la zone image,
Tt étant le temps de transfert de la zone image vers la zone mémoire via la zone de transfert, et
T2 étant le temps total d'intégration, recouvrant les deux intégrations réalisées, respectivement et de façon concomitante, dans la zone image et dans la zone mémoire.

A l'instant t, le pixel i aura intégré une charge Qi.

Au cycle élémentaire d'horloge suivant, on transfère la charge en parallèle sur les deux condensateurs 31 et 32.

Au début du cycle élémentaire d'horloge suivant, on sépare les deux condensateurs, le condensateur 32 conservant alors la charge Qi/n.

Pendant ce même cycle élémentaire d'horloge, on rajoute la charge Qi/n à celle Qg déjà contenue dans la dernière cellule de la zone mémoire et obtenue par les transferts antérieurs, et on réinjecte cette charge en entrée de cette même ligne de la zone mémoire, la charge Qg devenant ainsi Qg+Qi/n.

On opère ainsi successivement pour chacun des pixels de la ligne (il peut y avoir, par exemple, 2000 pixels par ligne), en poursuivant les deux intégrations concomitantes sur le nombre de cycles voulus, par exemple cent cycles d'intégration.

A l'instant t = T2, après le dernier transfert de la zone image, on arrête l'intégration.

On lit alors la charge contenue dans la zone mémoire et on la transforme en une tension ou un courant.

On notera que le transfert de la zone image vers la zone mémoire nécessite deux cycles élémentaires d'horloge, alors que les transferts de charge entre cellules adjacentes du réseau n'en nécessitent qu'un seul.

Aussi, pour conserver au séquencement du composant son caractère synchrone, on prévoira pour la commande du transfert de charges dans la zone de transfert une horloge deux fois plus rapide que celle utilisée pour les transferts de charge dans la zone image et dans la zone mémoire.

L'effet de la double intégration est de procurer une dynamique totale qui est la somme de la dynamique du réseau DTC de la zone image et la fraction de charge utilisée par le réseau de la zone mémoire. Avec un facteur de division $n$ de 100 : 1 (grâce par exemple à un condensateur 32 de capacité 1 pF et un condensateur 31 de capacité 99 pF), on obtient un gain de 40 dB par la seconde intégration, soit une dynamique de traitement de 120 + 40 = 160 dB, avec un composant peu différent des composants de l'art antérieur en ce qui concerne ces dimensions et son séquencement.

On notera cependant que, du fait de la limitation des composants DTC, la dynamique en sortie demeure égale à 120 dB dans cet exemple, mais que ces 120 dB sont cadrés dans le haut des 160 dB de la dynamique totale du traitement interne.

Les avantages de l'invention sont principalement les suivants :

– du fait que la signal ne sort jamais du composant entre le début et la fin de l'intégration, le résultat conserve donc toute son intégrité ;

– le composant étant structurellement peu différent des composants actuels, l'augmentation de performances se fait sans surcoût appréciable, alors qu'une double intégration par deux composants DTC distincts grevait de façon importante le prix d'ensemble ;

– le rapport signal/bruit est excellent, du fait que le bruit n'est introduit qu'une seule fois (lors de la lecture finale, à la fin du temps d'intégration total T2) et en un seul endroit (en sortie du composant).

Du fait que la structure et les avantages de l'invention sont totalement indépendant de la nature du signal qui est intégré, le réseau DTC à grande dynamique de l'invention est intéressant dans toutes les applications qui nécessitent un temps d'illumination prolongé et une grande dynamique d'intégration.

Il en est ainsi notamment :

– dans toute les applications d'imagerie de scènes peu lumineuses ou de faible contraste (télévision, astronomie, télécopie, etc.) ; et

– dans les applications de traitement du signal par voie optique qui utilisent les transferts de charge (intégration, filtrage, etc.), typiquement pour les traitements de corrélation nécessitant la gestion de la valeur moyenne d'un signal ; dans certains cas (filtrage, notamment), le coefficient de division $n$ peut être lié aux coefficients de l'équation de filtrage.

## Revendications

1. Un dispositif à transfert de charges, comportant, sur un même composant :

– une zone image (ZI), comprenant un premier réseau (10) d'au moins un ligne (11) de cellules (12) constituées chacune d'un pixel photoactif recevant une énergie lumineuse (hν) et opérant une première intégration de celle-ci par accumulation d'une charge électrique correspondante (Qi), cette charge pouvant être ensuite transférée de proche en proche dans le réseau, le long de la ligne, jusqu'à une extrémité de cette dernière,

– une zone mémoire (ZM), comprenant un second réseau (20) de cellules (21) non photoactives, et dont le nombre de lignes est homologue de celui du premier réseau,

– une zone de transfert (ZT), interposée entre la zone image (ZI) et la zone mémoire (ZM), pour recevoir les charges cumulées dans les cellules du premier réseau et les transférer vers le second réseau pour les y emmagasiner, et

– des moyens de lecture (40), pour détecter les charges emmagasinées dans le second réseau et les transformer en un signal électrique de tension ou de courant,

ce dispositif à transfert de charges étant caractérisé en ce que, pour ladite ligne ou pour chacune desdites lignes :

– la ligne (21) du second réseau (20) est une ligne bouclée séquencée en même temps que la ligne correspondante (11) du premier réseau (10) et à la même cadence,

cette ligne (21) comprenant une entrée (23) et une sortie (24), de manière à pouvoir recevoir sur cette sortie les charges introduites en entrée et transférées de proche en proche jusqu'à la sortie, et

– la zone de transfert (ZT) comprend :

• des moyens diviseurs de charge (31, 32), recevant en entrée ladite charge (Qi) transférée de proche en proche dans le premier réseau le long de la ligne et fractionnant celle-ci en deux sous-charges ((1-1/n)Qi ; Qi/n) de rapport relatif (n) prédéterminé,

• des moyens pour neutraliser la première de ces sous-charges, et

• des moyens pour ajouter la seconde (Qi/n) de ces sous-charges à la charge (Qg) reçue en sortie de la ligne bouclée et réinjecter la charge totale (Qg+Qi/n) résultante à l'entrée de la ligne bouclée de manière à l'y faire recirculer,

le séquencement concomitant des lignes du premier réseau et du second réseau étant répété sur une pluralité de cycles, de manière à faire croître, par cumul des secondes sous-charges successives dans la ligne bouclée, la charge correspondante du réseau mémoire et accroître ainsi, par la seconde intégration qui en résulte, la dynamique du dispositif à transfert de charges dans une proportion correspondant audit rapport prédéterminé des deux sous-charges.

2. Le dispositif à transfert de charges de la revendication 1, caractérisé en ce que lesdits moyens diviseurs de charge sont des moyens diviseurs capacitifs (31, 32).

3. Le dispositif à transfert de charges de la revendication 1, caractérisé en ce que lesdits moyens diviseurs de charge sont des moyens diviseurs électriques.

4. Le dispositif à transfert de charges de la revendication 1, caractérisé en ce que ledit rapport prédéterminé des deux sous-charges est de l'ordre de 1 :100, de manière à obtenir un accroissement correspondant de dynamique de 40 dB.

5. Le dispositif à transfert de charges de la revendication 1, caractérisé en ce que ladite ligne bouclée (21) est réalisée sur le composant sous forme d'une ligne repliée formée de deux moitiés adjacentes (21a, 21b) de même longueur et transférant les charges dans des sens opposés.

6. Le dispositif à transfert de charges de la revendication 5, caractérisé en ce que les cellules de la ligne bouclée repliée ont une largeur (W) qui est approximativement la moitié de celle des cellules de la ligne du premier réseau, de manière que les lignes homologues de chacun des réseaux aient des largeurs respectives qui soient sensiblement identiques.

FIG. 2

FIG. 1

FIG. 3

EP 0 438 335 A1

Office européen
des brevets

**RAPPORT DE RECHERCHE EUROPEENNE**

Numero de la demande

EP  91 40 0060

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 263 620  (FELIX)<br>* Colonne 2, ligne 34 - colonne 5, ligne 31 *<br>--- | 1 | H 04 N    3/15 |
| A | EP-A-0 315 778  (K.K. TOSHIBA)<br>* Colonne 2, ligne 54 - colonne 4, ligne 5; figure 2 *<br>--- | 1,5,6 | |
| A | EP-A-0 207 826  (THOMSON-CSF)<br>* Colonne 3, ligne 42 - colonne 5, ligne 10; colonne 8, ligne 17 - colonne 10, ligne 41; colonne 11, ligne 11 - colonne 12, ligne 27 *<br>--- | 1 | |
| A | US-A-4 317 134  (WOO et al.)<br>* Colonne 1, ligne 14 - colonne 2, ligne 30; colonne 2, ligne 63 - colonne 4, ligne 38 *<br>--- | 1,3 | |
| A | EP-A-0 130 295  (IBM)<br>* Page 5, ligne 32 - page 8, ligne 22 *<br>----- | 1,3 | **DOMAINES TECHNIQUES RECHERCHES (Int. Cl.4)**<br><br>H 04 N    3 |

Le présent rapport a été établi pour toutes les revendications

| Lieu de la recherche | Date d'achèvement de la recherche | Examinateur |
|---|---|---|
| LA HAYE | 27-02-1991 | DUHR R.H.J.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)